(19) **Europäisches Patentamt**
**European Patent Office**
**Office européen des brevets**

(11) **EP 3 773 004 B1**

(12) **EUROPEAN PATENT SPECIFICATION**

(45) Date of publication and mention
of the grant of the patent:
**10.11.2021 Bulletin 2021/45**

(51) Int Cl.:
*A23L 27/10* (2016.01)   *A23P 10/25* (2016.01)
*A23L 27/22* (2016.01)   *A23L 27/40* (2016.01)
*A23L 33/115* (2016.01)   *A23L 23/10* (2016.01)

(21) Application number: **19733786.8**

(22) Date of filing: **27.06.2019**

(86) International application number:
**PCT/EP2019/067173**

(87) International publication number:
**WO 2020/002510 (02.01.2020 Gazette 2020/01)**

(54) **SHAPED SAVOURY CONCENTRATE AND PROCESS FOR THE PREPARATION THEREOF**

GEFORMTES WOHLSCHMECKENDES KONZENTRAT UND VERFAHREN ZUR HERSTELLUNG DAVON

CONCENTRÉ SAVOUREUX FAÇONNÉ ET LEUR PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2018 EP 18180702**

(43) Date of publication of application:
**17.02.2021 Bulletin 2021/07**

(73) Proprietor: **Unilever IP Holdings B.V.**
**3013 AL Rotterdam (NL)**

(72) Inventors:
• **ARNAUDOV, Luben, Nikolaev**
**3133 AT Vlaardingen (NL)**
• **BLIJDENSTEIN, Theodorus, Berend, Jan**
**3133 AT Vlaardingen (NL)**
• **VAN MALSSEN, Kees, Frederik**
**3133 AT Vlaardingen (NL)**
• **STOYANOV, Simeon, Dobrev**
**3133 AT Vlaardingen (NL)**

(74) Representative: **van den Brom, Coenraad Richard et al**
**Unilever N.V.**
**Unilever Patent Group**
**Bronland 14**
**6708 WH Wageningen (NL)**

(56) References cited:
**EP-A1- 0 981 970   WO-A1-2017/186514**

## Description

### Field of the invention

The invention relates to a process of preparing a shaped savoury concentrate having a water activity of less than 0.8 and a total fat content of 10-35 wt.%, said process comprising:

a) combining the following ingredients to prepare a powder mixture:

- 100 parts by weight of edible salt selected from sodium chloride, potassium chloride and combinations thereof,
- 2-150 parts by weight of one or more particulate ingredients selected from sugars, glutamate, plant pieces and combinations thereof;

b) admixing 5-150 parts by weight of a fat component to the powder mixture to form a paste, wherein the fat component has a solid fat content ($N_{20}$) of at least 20% and a solid fat content ($N_{35}$) of less than 30%, wherein on admixing with the powder mixture the fat component has a solid fat content ($N_{20}$) of least 10%, whereby step b) is carried out a temperature in the range of 10 to 45°C, preferably 12 to 40°C, more preferably 15 to 35°C and said temperature on admixing is maintained such that the fat component has a solid fat content of at least 10%, preferably at least 20%, c) extruding the paste into shaped savoury concentrate.

The preparation process of the present invention enables the manufacture of shaped savoury concentrates without maturation of the savoury concentrate prior to packaging. The invention also relates to an extruded savoury concentrate having a water activity of less than 0.8 and comprising:

- 30-80 wt.% of edible salt selected from sodium chloride, potassium chloride and combinations thereof;
- 2.4-50 wt.% of one or more particulate ingredients selected from sugars, glutamate, plant pieces and combinations thereof;
- 0.2-8 wt.% of polar fluid selected from water, liquid polyols, ethanol and combinations thereof;
- 10-20 wt.% of fat component, wherein the fat component has an $N_{20}$ of at least 20% and an $N_{35}$ of less than 30%; preferably the fat component has a volume weighted crystallite thickness distribution wherein at least 50% of crystallites have a crystallite thickness of less than 40 nm;
- 0-5 wt.% of maltodextrin;

wherein the combination of edible salt and the one or more particulate ingredients constitutes at least 60 wt.% of the savoury concentrate.

The savoury concentrate of the present invention can suitably be used in the preparation of bouillons, soups, sauces and gravies to provide taste and thickness in the final product. The concentrate can also be applied as a seasoning or a condiment on meal components. Bouillon cubes are a well-known example of a shaped savoury concentrate.

### Background of the invention

Bouillon or seasoning cubes are widely used as a concentrate to prepare bouillon, broths, soups, sauces and gravies. In the preparation of these foodstuffs, bouillon cubes are usually added to a hot aqueous liquid to disperse and dissolve the bouillon cubes. Bouillon cubes are also used as a seasoning. Seasoning cubes are usually added to a dish or food by crumbling.

A typical bouillon cube comprises salts, taste enhancing compounds like monosodium glutamate and/or yeast extract, sugars, starch, flour, fat, herbs, spices, meat extracts and colorants. The amounts of the respective ingredients may vary, depending on the specific purpose of the product and local preferences.

In general two types of bouillon cubes can be distinguished, i.e. the pressed and the extruded type. Pressed bouillon cubes are typically pressed from powder by a rotating press, resulting in a relatively hard and dense cube. In the pressed cube, the fat typically forms a dispersed phase. A specific form of pressing is roller compacting. In this technique the powder is pressed and compacted between two counter-rotating rolls.

Extruded bouillon cubes are typically prepared by extruding a pasty mass using commercially available machines from e.g. Corazza™ or Benhill™. Extruded cubes tend to be softer than pressed cubes and fat typically forms the continuous phase in these cubes. The fat content of extruded bouillon cubes is usually higher than the fat content of pressed bouillon cubes.

In order to shape a bouillon concentrate into a readily dissolvable, stable cube by compression or extrusion, a binding agent usually needs to be employed. High melting fat is an ideal binding agent for extruded bouillon cubes because it can easily be dispersed throughout the concentrate in a molten state and it provides cohesion and structure to the pressed or extruded bouillon cube once it has solidified. Unfortunately, in the industrial production of bouillon cubes it usually takes at least several hours for molten fat in the bouillon concentrate mass to crystallize in a crystal-form and to an extent that enables the pressing or extrusion of stable bouillon cubes. In practice this means that bouillon concentrate that has been prepared at elevated temperature needs to be kept in a buffer container for several hours to allow the fat component to solidify. This stage is commonly referred to in the art as 'maturation' or 'aging'.

US 6,099,888 describes a process for producing stock cubes, without an ageing time, by mixing ingredients comprising salt, fat, extract and, optionally, water and other additives, wherein mixing is performed by continuous addition of the ingredients into an extruder to make a mixture, continuously processing the mixture in the extruder which is cooled sufficiently to cause crystallization of the fat within the extruder, extruding the mixture through a shaping die to form a dimensionally stable extrudate having a density of 1.0-2.0 g/cm$^3$. Food grade fats suitable for the process are those having a melting point in the range 32-51 °C. The fat must be introduced at elevated temperature, for example 40-60 °C.

WO2017/186514 describes a process of preparing a shaped savoury concentrate having a water activity of less than 0.8 and a total fat content of 10-35 wt.%, said process comprising: a) mixing the following ingredients to prepare a fat containing powder mixture: edible salt selected from sodium chloride, potassium chloride and combinations thereof, one or more particulate ingredients selected from sugars, glutamate, flour, starch plant pieces and combinations thereof, and liquid or molten fat, said fat comprising at least 30 wt.% of vegetable oil; b) mixing the fat containing powder mixture with an edible polar liquid to produce a paste; c) optionally mixing the paste with edible components selected from fat, garnish and combinations thereof; and d) forming the paste into shape articles by means of extrusion.

Example 2 shows a shaped concentrate comprising:

Sodium chloride - 40.6 wt.%
Mono sodium glutamate - 13.8 wt.%
Spice mix - 9.7 wt.%
Wheat flour- 10.0 wt.%
Glutinous rice flour - 7.3 wt.%
Sunflower oil - 8.3 wt.%
Glucose syrup - 1.6 wt.%
Palm stearin - ($N_{20}$ = 60-70 %, $N_{35}$=32-40 %) - 8.3 wt.%

**Summary of the invention**

The inventors have unexpectedly discovered that it is possible to prepare a fat-containing shaped savoury concentrate by extrusion without maturation prior to packaging. This is achieved by first mixing edible salt and one or more particulate ingredients to prepare a powder mixture, followed by admixing an at least partially crystalline fat component (i.e. the fat component has a solid fat content of least 10% ($N_{20}$)), into the powder mixture to produce a paste and immediately extruding the paste in to shaped savoury a concentrate.

Although the inventors do not wish to be bound by theory, it is believed that by introducing the fat component in a partially crystalline form a paste is formed that is structured by a crystalline fat network. Surprisingly, this paste does not need to undergo a post-mixing maturation step prior to extrusion and packaging as the crystalline fat network provides shape retention and hardness to the extruded concentrate.

Accordingly, the present invention provides a process of preparing a shaped savoury concentrate having a water activity of less than 0.8 and a total fat content of 10-35 wt.%, said process comprising:

a) combining the following ingredients to prepare a powder mixture:

- 100 parts by weight of edible salt selected from sodium chloride, potassium chloride and combinations thereof,
- 2-150 parts by weight of one or more particulate ingredients selected from sugars, glutamate, plant pieces and combinations thereof;

b) admixing 5-150 parts by weight of a fat component to the powder mixture to form a paste, wherein the fat component has a solid fat content ($N_{20}$) of at least 20% and a solid fat content ($N_{35}$) of less than 30%, wherein on admixing with the powder mixture the fat component has a solid fat content ($N_{20}$) of least 10%. 10%, whereby step b) is carried out at a temperature in the range of 10 to 45°C, preferably 12 to 40°C, more preferably 15 to 35°C and said temperature on admixing is maintained such that the fat component has a solid fat content of at least 10%, preferably at least 20%,

c) extruding the paste into shaped savoury concentrate.

Thus, the present invention also provides an extruded shaped savoury concentrate having a water activity of less than 0.8 and a total fat content of 10-35 wt.%, comprising:

- 30-80 wt.% of edible salt selected from sodium chloride, potassium chloride and combinations thereof;
- 2.4-50 wt.% of one or more particulate ingredients selected from sugars, glutamate, plant pieces and combinations thereof;
- 0.2-8 wt.% of polar fluid selected from water, liquid polyols, ethanol and combinations thereof;
- 10-20 wt.% of fat component, wherein the fat component has an $N_{20}$ of at least 20% and an $N_{35}$ of less than 30%, wherein the fat component has a volume weighted crystallite thickness distribution wherein at least 50% of crystallites have a crystallite thickness of less than 40 nm.
- 0-5 wt.% of maltodextrin;

wherein the combination of edible salt and the one or more particulate ingredients constitutes at least 60 wt.% of the savoury concentrate.

The savoury concentrate according to the invention has the advantage that the savoury concentrate has the appearance and hardness as expected by the consumer, yet comprises less high melting point fats.

**Detailed description of the invention**

A first aspect of the invention relates to a process as defined in claim 1.

The term "fat component" as used herein refers to glycerides selected from triglycerides, diglycerides, monoglycerides, phosphoglycerides and combinations thereof. The fat can be liquid, solid or semi-solid at ambient temperature (20°C).

The term "maturation" as used herein refers to the holding of a fat containing mix at a temperature that is well below the melting temperature of the fat component in order to solidify at least part of said fat component.

The solid fat content of fat at 20°C ($N_{20}$) or at other temperatures can suitably be determined using the method described in Animal and vegetable fats and oilsDetermination of solid fat content by pulsed NMR -- Part 1: Direct method - ISO 8292-1:2008.

In case the solid fat content of the total fat in the savoury concentrate is determined, this is typically done by first completely melting the fat in the savoury concentrate, subsequently cooling the molten fat from the savoury concentrate, following the cooling protocol described in the ISO method, in order to access the solid fat content of the total fat in the savoury concentrate at the required temperature.

The particle size distribution of salt and the particulate components that are employed in the present process can suitably be determined by means of laser light diffraction for dry powders, or alternatively by using a set of sieves with different mesh sizes. The particle size distribution of particulate ingredients within the present savoury concentrate may be determined with a combination of Synchrotron Radiation Micro-CT and cryo SEM combined with EDX spectroscopy, microscopy and image analysis.

The average crystal thickness and the volume weighted crystallite thickness distribution of the savoury concentrate can be determined by Small Angle X-ray Diffraction (SAXD) as described herein.

*Savoury concentrate*

The shaped savoury concentrate of the present invention is solid or semisolid, preferably solid at 20°C. Upon dilution with water, typically hot water, the savoury concentrate preferably forms a bouillon, broth, gravy or sauce. According to a particularly preferred embodiment, the savoury concentrate is a bouillon cube, most preferably an extruded bouillon cube. Besides a strict cube shape, "cube" comprises shapes like a tablet, pillow, cylinder, ball, pyramid, as long as the shape can be used as a unit dosing format.

The savoury concentrate typically has a unit weight between 1 and 50 g, preferably between 2 and 25 g, more preferably between 3 and 22 g, and even preferably between 4 and 20 g, most preferably between 5 and 15 g.

The water activity of the savoury concentrate preferably does not exceed 0.8. More preferably, the water activity of the concentrate lies in the range of 0.3 to 0.6, most preferably in the range of 0.35 to 0.5.

The combination of edible salt and the one or more particulate ingredients preferably constitutes at least 64 wt.% and most preferably 68-90 wt.% of the savoury concentrate.

Besides edible salt, the one or more particulate ingredients and the optional edible components, the savoury concentrate may suitably contain a variety of other edible ingredients. Examples of such ingredients include extracts of herbs or spices, meat extracts, flavours and colouring.

Preferably, the savoury concentrate comprises not more than 10 wt.% of other edible ingredients selected from extracts of herbs or spices, meat extracts, flavours and colouring. More preferably, the savoury concentrate comprises not more than 5 wt.%, most preferably not more than 2.5 wt.% of said other edible ingredients.

Preferably, the savoury concentrate comprises less than 2.5 wt.% of maltodextrin. More preferably the savoury concentrate comprises less than 1 wt.% of maltodextrin. Most preferably, the savoury concentrate comprises no maltodextrin.

The savoury concentrate has a total fat content of 10-35 wt.%. Preferably, the total fat content is 10-30 wt.%, more preferably 10-35 wt.%, even more preferably 10-20 wt.%.

The savoury concentrate of the present invention preferably has a hardness in the range of 10-100 N. More preferably, the hardness of the savoury concentrate is within the range of 15-80 N, most preferably in the range of 20-50 N.

The hardness of the savoury concentrate may suitably be determined using the procedure described in the examples.

The shaped savoury concentrate of the present invention is preferably obtainable, more preferably obtained by, the preparation process described herein.

*Edible salt*

The edible salt that is used in accordance with the present invention is selected from sodium chloride, potassium chloride and combinations thereof. Preferably, sodium chloride represents at least 50 wt.%, more preferably at least 80 wt.% and most preferably at least 98 wt.% of said edible salt.

The edible salt which is employed in accordance with the invention preferably has a mass weighted average diameter in the range of 10-2000 μm, more preferably in the range of 100-1200 μm, and most preferably in the range of 200-800 μm. Mass weighted average diameter can be suitably determined by methods known to the skilled person, for example by laser diffraction.

Typically, at least 80 wt.% of the edible salt has a particle size in the range of 10-2000 μm. Even more preferably at least 80 wt.% of the edible salt has a particle size in the range of 50-1500 μm. Most preferably, at least 80 wt.% of the edible salt has a particle size in the range of 100-1000 μm.

The savoury concentrate preferably contains 32-70 wt.%, more preferably at least 34-60 wt.% and most preferably 35-50 wt.% of edible salt selected from sodium chloride, potassium chloride and combinations thereof. Most preferably, the edible salt is sodium chloride.

*Particulate ingredients*

Optionally, one or more particulate ingredients are combined with edible salt and the fat component. These particulate ingredients are selected from sugars, glutamate, plant pieces and combinations thereof. Preferably, these particulate ingredients are employed in an amount of 4 to 100 parts by weight, more preferably 4.5 to 40 parts by weight and most preferably 5 to 30 parts by weight.

Preferably, the sugars are selected from the group of monosaccharides, disaccharides and trisaccharides. More preferably, the sugars are sucrose.

According to a preferred embodiment, the one or more particulate ingredients employed in the preparation of savoury concentrate include 0.5-50 parts by weight, more preferably 1-40 parts by weight and most preferably 5-35 parts by weight of glutamate.

In accordance with a further preferred embodiment the one or more particulate ingredients used in the present process include 1-75 parts by weight, more preferably 5-60 parts by weight and most preferably 10-50 parts by weight of starch component selected from flour, starch and combinations thereof. Preferably the starch in the starch component is native starch.

The one or more particulate ingredients employed in the process may advantageously include 1-15 parts by weight, more preferably 2-12 parts by weight and most preferably 3-10 parts by weight of plant pieces. Preferably, these plant pieces are dried plant pieces. Examples of plant pieces that may suitably be employed are spices, herbs, vegetables and combinations thereof.

Examples of herbs that may suitably be used include: parsley, dill, chive and/or coriander. Examples of suitable spices include: pepper, garlic, celery seed, fennel seed and/or coriander seed. Vegetables may be incorporated in the savoury concentrate for taste and garnish. Examples of dried vegetables that may be used include onions, carrots, bell pepper, spinach and/or leek.

The one or more particulate ingredients employed in the present process typically have a mass weighted average diameter of at least 10 μm, more preferably of 15-3000 μm and more preferably of 20-2000 μm, even more preferably 30-1000 μm and most preferably 40-500 μm.

The one or more particulate ingredients typically represent 2.4-50 wt.%, more preferably 2.7-40 wt.% and most preferably 3-30 wt.% of the savoury composition.

*Fat component*

In a preferred embodiment of the present process 8-100 parts by weight of fat component are used in the preparation of the savoury concentrate. More preferably, fat is employed in an amount of 10-80 parts by weight, most preferably in an amount of 12-50 parts by weight.

The fat component that is employed in the preparation of the paste is preferably a fat having a $N_{20}$ of less than 60%, more preferably of less than 55% and most preferably of less than 50%. Preferably the fat component has solid fat content at 20°C ($N_{20}$) of more than 20%, more preferably of more than 25% and most preferably of more than 30%.

The fat component that is employed in the preparation of the paste is preferably a fat having an $N_{30}$ of less than 40%, more preferably of less than 35%, even more preferably less than 30%. Preferably the fat component has an $N_{30}$ of more than 10%, more preferably of more than 15%, even more preferably more than 20%.

The fat component that is employed in the preparation of the paste is preferably a fat having an $N_{35}$ of less than 30%, more preferably of less than 25%, even more preferably less than 20%. Preferably the fat component has an $N_{35}$ of more than 5%, more preferably of more than 10%.

The fat component that is employed in the preparation of the paste preferably is a fat has an $N_{40}$ of less than 30%, more preferably of less than 25%, even more preferably less than 20%. Preferably the fat component has an $N_{40}$ of more than 3%, more preferably of more than 10%.

The fat component used to prepare the paste typically has a solid fat content at 20°C ($N_{20}$) of more than 20% and less than 60%.

The fat component used to prepare the paste typically has a solid fat content at 30°C ($N_{30}$) of more than 10% and less than 40%.

The fat component used to prepare the paste typically has a solid fat content at 35°C ($N_{35}$) of more than 10% and less than 30%.

The SAFA (saturated fatty acid) content of the fat that is employed to prepare the paste preferably does not exceed 60% by weight of the total amount of fatty acids. More preferably, said SAFA content does not exceed 40 wt.%, most preferably it does not exceed 20 wt.%.

The fat component is typically a blend of one or more fats which can be prepared with any suitable technique known in the art. Suitable fat components are, for example, fat components comprising a blend of two or more fats selected from the group consisting of rape seed oil, palm oil, palm oil stearin and fully hydrogenated palm oil.

Preferably, the fat component is prepared by combining and cooling at least two fats in a scraped heat exchanger. For example, by use of a conventional scraped surface heat exchanger (a.k.a. A-units) for cooling and crystallizing a mixture of fat component and optionally an edible polar liquid, for example water, followed by a mixing operation of the cooled emulsion, such as in a pin-stirrer (a.k.a. C-unit).

In step b) of the present invention, the fat component admixed with the powder mixture has a solid fat content of at least 10% ($N_{20}$). Step b) is carried out a temperature in the range of 10 to 45°C, preferably 12 to 40°C, more preferably 15 to 35°C. The temperature on admixing is maintained such that the fat component has a solid fat content of at least 10%, preferably at least 20%.

Preferably, the fat component has been kept at a temperature below 40°C for at least 1 hour, prior to the admixing with the powder mixture. More preferably, the fat component has been kept at a temperature below 30°C, even more preferably below 20°C for at least 1 hour, prior to the admixing with the powder mixture. The fat component may be in the form of a block having a cubic, cuboid or cylindrical shape.

The fat component added in step b) preferably has a volume weighted fat crystallite thickness distribution (CTD), as determined by small-angle X-ray diffraction, wherein at least 50% of the fat crystallites have a thickness of less than 40 nm. More preferably, the fat component has a volume weighted fat crystallite thickness distribution (CTD), as determined by small-angle X-ray diffraction, wherein at least 90% of the fat crystallites have a thickness of less than 60 nm.

Typically, the extruded shaped savoury concentrate provided by step c) of the method defined herein comprises a fat component that preferably has a volume weighted fat crystallite thickness distribution (CTD), as determined by small-angle X-ray diffraction within 1 week of extrusion, wherein at least 50% of the fat crystallites have a thickness of less than 40 nm. More preferably, the fat component has a volume weighted fat crystallite thickness distribution (CTD), as determined by small-angle X-ray diffraction, wherein at least 90% of the fat crystallites have a thickness of less than 60 nm.

In a preferred embodiment the volume weighted fat crystallite thickness distribution (CTD) of the fat component in step b) differs by less than 40%, preferably less than 30%, more preferably less than 20%, even more preferably less than 10% when the fat component is extruded. In other words, the crystalline fat network present in the fat component in step b) is stable when the fat component is extruded, resulting in a savoury concentrate that has desirable hardness and dissolvability characteristics.

The volume weighted fat crystallite thickness distribution (CTD) can be determined as defined herein. Briefly, an XRD 00*l* peak intensity distribution, where *l* is the peak order, is corrected for the Lorentz-polarisation factor (LP), for a layer scattering factor (if required) and a scattering background. As a result of these corrections, the interference function of the peak $\phi_{00l}(Z^*)$ expressed as a function of $Z^*$ (= $2\sin\theta/\lambda$) is obtained, which contains information of the CTD and strain. At the next step the interference function is expanded in terms of a Fourier series:

$$H(n) = \sum_{Z^*=\frac{2\sin(\theta_{00l}-\Delta\theta)}{\lambda}}^{\frac{2\sin(\theta_{00l}+\Delta\theta)}{\lambda}} \phi_{00l}(Z^*)\cos(2\pi Z_n Z^*) \qquad (1)$$

where $Z_n$=nd(001), $n$ is the number of fat molecule structural layers, $d(001)$ is the interlayer spacing, $\theta_{00l}$ is the XRD peak position, $2\Delta\theta$ is the width of analysed Bragg angle interval. The Fourier coefficients calculated from Equation (2) are related to the CTD function f(M), represented via a number of TAG layers in the crystallites, M:

$$H(n) = \frac{1}{\overline{M}} \sum_{M=M_1}^{M_2} (M-n)f(M) \qquad (2)$$

where M1 and M2 correspond to CTDs having the smallest and the largest number of TAG layers, respectively, and $\overline{M}$ is the mean number of layers defined as:

$$\overline{M} = \sum_{M=M_1}^{M_2} Mf(M) \text{ and } \sum_{M=M_1}^{M_2} f(M) = 1 \qquad (3)$$

It follows from Equation (3) that the mean thickness (ACT) and the thickness distribution (CTD) can be obtained from H(n):

$$\frac{\partial H(n)}{\partial n}\bigg|_{n\to 0} = \frac{1}{\overline{M}} \text{ and } \frac{\partial^2 H(n)}{\partial n^2}\bigg|_{n\to 0} = \frac{f(M)}{\overline{M}} \qquad (4)$$

The average crystal thickness (ACT) and CTD can be obtained from $\overline{T} = \overline{M}d(001)$ and $f(T)$ respectively.

The fat component preferably has a uniform hardness. By 'uniform' is meant a standard error of the Stevens hardness measurements for a fat component of less than 20%, preferably less than 10%. In other words the measured hardness is substantially consistent throughout the fat component. In other words, the fat component has a solid fat content ($N_{20}$) of at least 10% when the fat component is admixed with the powder mixture. The uniform hardness can be determined as defined herein. Briefly, the hardness at multiple (n≥10) locations on the surface of a fat component is measured using a Stevens meter. The fat component is in the form of a block or contained in a container. The standard deviation of the measurements is calculated, and the standard error (standard deviation / average measurement) is calculated.

*Edible polar liquid and polar fluid*

In the present process 100 parts by weight of the powder mixture or the fat component and powder paste are preferably mixed with 0.3-8 parts by weight, more preferably 0.4-6 parts by weight and most preferably 0.5-4 parts by weight of edible polar liquid to produce a paste.

The edible polar liquid employed in the present process can be pure liquid or a mixture of liquids. The polar liquid may further contain one or more dissolved or dispersed components.

In accordance with one embodiment, the edible polar liquid contains 50-100 wt.%, more preferably 70-100 wt.% and most preferably 80-100 wt.% of fluid selected from water, liquid polyols, alcohols, sugar syrups and combinations thereof. Examples of liquid polyols that may be employed include glycerol and propylene glycol. Preferably, the edible polar liquid contains 50-100 wt.% water. More preferably the polar liquid contains 70-100 water, most preferably 90-100 wt.% water.

According to another preferred embodiment, the edible polar liquid contains 15-90 wt.% water and 10-85 wt.%

of solute. The solute preferably contains at least 80 wt.% of sugars, salts, polysaccharides and combinations thereof. More preferably, the solute contains at least 80 wt.% of sugars. Preferably, these sugars are selected from the group of monosaccharides, disaccharides and trisaccharides.

According to yet another embodiment, the edible polar liquid is a single phase mixture of two or more edible polar liquids, e.g. of water and glycerol. Preferably, the single phase mixture contains at least 50 wt.% water.

The savoury concentrate preferably contains 0.2-8 wt.% of the polar fluid. More preferably, the concentrate contains 0.4-6 wt.%, most preferably 0.5-4 wt.% of the polar fluid.

The water content of the savoury concentrate preferably lies in the range of 0.1-6 wt.%, more preferably of 0.2-4 wt.% and most preferably of 0.3-3 wt.%.

*Optional edible components*

In the present process the paste obtained by mixing the fat component and powder mixture may further be mixed with a edible polar liquid and/or mixed with edible components selected from fat, garnish and combinations thereof. Preferably, 100 parts by weight of said paste are mixed with 0.1-20 parts by weight, more preferably 1-15 parts by weight and most preferably 5-12 parts by weight of these edible components.

*Process*

The preparation of the fat containing paste in the present process may suitably be done in a mixing vessel, e.g. a Plough-shear type of mixer. Preferably, the edible salt and the one or more particulate ingredients are first introduced into the mixing vessel. Next, the polar liquids and fat is added. Preferably, the temperature on admixing the fat component in step b) is in the range of 10 to 45°C, preferably 12 to 40°C, more preferably 15 to 35°C.

The combination of edible salt, one or more particulate ingredients and fat that is formed in the mixing vessel typically has a temperature of 10-40°C, more preferably of 15-35°C.

The length of time for admixing of the fat component to the powder mixture in step b) is preferably between 2 and 20 minutes, more preferably between 5 and 15 minutes. In other words, step b) is carried out for preferably 2 to 20 minutes, more preferably 5 to 15 minutes.

The fat paste obtained in the present process usually is of a smooth, sticky and malleable consistency.

The fat paste mixture is preferably mixed with the edible polar liquid, if present, in a mixing vessel. Again, this may suitably be done in a Plough-shear type of mixer. Preferably the edible polar liquid is gradually added. The paste preferably has a temperature in the range of 10-40°C, more preferably in the range of 15-35°C when the edible polar liquid is mixed with said powder mixture. The paste that is produced by the mixing of the paste and the edible polar liquid is preferably pumpable or extrudable. Optionally, edible components may be mixed with the paste. Also this process step may suitably be carried out in a Plough-shear, Double Helix or Z-arm type of mixer.

The paste, optionally after admixing of the edible components, is preferably formed into shaped articles having a weight of 1 to 50 grams. Extruded shaped articles, such as cubes, can be prepared by compacting a portion of the paste in a mould that is open at one side. Known equipment from Corazzas™ or Benhills™ can be used to prepare extruded shaped articles. The paste is preferably extruded at an exit temperature in the range of 20-60°C, more preferably in the range of 25-45°C.

Preferably, the paste is extruded within 30 minutes after the fat component has been admixed to the powder mixture, preferably wherein the paste is extruded within 15, more preferably within 10 minutes, after the fat component has been admixed to the powder mixture.

A second aspect of the present invention relates to an extruded savoury concentrate having a water activity of less than 0.8 and comprising:

- 30-80 wt.% of edible salt selected from sodium chloride, potassium chloride and combinations thereof;
- 2.4-50 wt.% of one or more particulate ingredients selected from sugars, glutamate, plant pieces and combinations thereof;
- 0.2-8 wt.% of polar fluid selected from water, liquid polyols, ethanol and combinations thereof;
- 10-20 wt.% of fat component, wherein the fat component has a $N_{20}$ of at least 20%, and preferably a $N_{35}$ of less than 30%, preferably wherein the fat component has a volume weighted crystallite thickness distribution wherein at least 50% of crystallites have a crystallite thickness of less than 40 nm;
- 0-5 wt.% of maltodextrin;

wherein the combination of edible salt and the one or more particulate ingredients constitutes at least 60 wt.% of the savoury concentrate.

The embodiments described for the process according to the present invention apply *mutatis mutandis* to the savoury concentrate as defined herein.

In a preferred embodiment, the fat crystallite thickness distribution of the fat component present in the savoury concentrate can be determined by Small Angle X-ray Diffraction (SAXD) as defined elsewhere herein.

Typically, the fat crystallite thickness distribution of the savoury concentrate as defined herein comprises a fat component that preferably has a volume weighted fat crystallite thickness distribution (CTD), as determined by small-angle X-ray diffraction, wherein at least 50% of the fat crystallites have a thickness of less than 40 nm. More preferably, the fat component has a volume weighted fat crystallite thickness distribution (CTD), as determined by small-angle X-ray diffraction, wherein at least 90% of the fat crystallites have a thickness of less than 60 nm.

In a preferred embodiment, the savoury concentrate has a hardness in the range of 20-50 N, preferably in the range of 25-40 N.

*Use*

A further aspect of the disclosure relates to the use of the shaped savoury concentrate of the present invention in the preparation of foodstuffs, said use comprising combining said savoury concentrate with hot aqueous liquid. Examples of foodstuffs that may suitably be prepared using the savoury concentrate include soups, bouillons, sauces and gravies

The invention is further illustrated by the following non-limiting examples.

**Examples**

**Analytical techniques**

**Hardness of bouillon cube**

The hardness of bouillon cubes was measured using a Texture analyser (TA XT Plus ex Stable Microsystems) equipped with a cylindrical probe having a diameter of 1.3 cm. A bouillon cube (dimensions 11,5 * 24 * 28 mm) was positioned horizontally under the probe, with the center of the cube in the horizontal plane coinciding with the center of the probe. The cube was compressed by lowering the probe at a constant speed of 0.5 mm/s over a distance of 3mm after touching the top surface. During compression, the force experienced by the probe is measured. The hardness is defined as the maximum pressure that is encountered divided by the surface of the probe in touch with the cube. Measurements are carried out tenfold.

**Dissolution time**

The dissolution speed of the cubes is measured by a dynamic conductivity measurement. A portion of 1 l demineralised water in a 2 liter beaker glass with a diameter of 12.7cm is brought at a temperature of 92 +/- 1°C and one cube is dissolved under continuous stirring using a triangular stirring bar with a length of 8 cm at a constant stirring speed of 170 rpm. The conductivity of the water is monitored in time using a Mettler Toledo Seven Compact conductivity meter. The conductivity rises due to dissolution of the salts from the formulation into the water, until all salt is dissolved and a maximum is reached. The dissolution time is defined as the time at which the conductivity has reached 90% of the final plateau conductivity value. Measurements are carried out in threefold.

**Water activity**

Water activity was determined using a Aqualab Lite (Novasina Lab partner) device. A portion of the Bouillon tablet or gel particles was crushed and divided on a plastic cup, brought into the device and the water activity was measured in quadruplo.

**Fat crystallite thickness distribution** - **Small Angle X-ray Diffraction (SAXD)**

The SAXD patterns of fats and bouillon cubes are measured on the Bruker D8 Discover X-ray powder diffractometer with GADDS (General Area Detector Diffraction System) in a $\theta/\theta$ configuration. A copper anode is used, and the K$\alpha$ radiation with wavelength ($\lambda$) 0.15418 nm is selected. By positioning the X-ray source and the 2D-detector at 0° 2$\theta$, transmission measurements are realised. To prevent the detector being hit by the primary beam a lead beam stop is precisely positioned in the middle and just in front of the detector. The samples are measured at 5°C by using a Linkam temperature stage. Samples are 2.0 mm thick and enclosed by X-ray Mylar film in the sample holder of this stage. The Linkam stage is positioned on the x,y,z table of the D8 Discover and the liquid nitrogen pump and heating module are placed in the cabinet during measurements. The adjusted temperature is checked by a thermocouple.

The used instrumental SAXD parameters are shown in table 1.

Table 1: D8 Discover instrumental parameters (SAXD) for fat measurements

|  | 2θ(1 - 10°) |
|---|---|
| Theta 1 | 0.000 |
| Theta 2 | 0.000 |
| X-ray generator (kV / μA) | 50 / 1000 |
| Time (sec) | 200 (for fat component) and 600 (for bouillon cubes) |
| Collimator (mm) | 1.0 |
| Detector distance (cm) | 32.5 |
| Tube Anode | Cu |

One dimensional X-ray diffraction patterns are determined from the 2D images using the GADDS (version 1.28) software. The obtained X-ray diffraction patterns are imported in the Bruker EVA software (version 12.0) and the Full Width at Half Maximum is determined. A simplified Fourier analysis approach developed for basal reflections of clays based on the original works by Bertaut [M.E. Bertaut, Acta Crystallogr 3 1950, 14] and Warren and Averbach [B. E. Warren, B. L. Averbach, J. Appl. Phys. 1950, 21, 595.], Crystallite thickness distribution (CTD) analysis of fats.

The Mudmaster [V. A. Drits, D. D. Eberl, J. Srodon, Clays and Clay Minerals, 1998, 46, 38] programme was adapted for this purpose. The XRD peak intensity distribution can be corrected for the Lorentz polarisation factor (Lp) and layer scattering intensity (G2). After removing the background, the interference function is left which contains information concerning crystallite size distribution and strain. The interference function 001 maximum, plotted as a function of $2\sin\theta/\lambda$, is then transformed into a Fourier series. The Fourier coefficients [A(n) and B(n)] can be corrected for instrumental broadening if this option is chosen. The Fourier coefficients are pasted into the worksheet where they are analysed for crystallite thickness. The crystallite thickness distributions may be smoothed and truncated to eliminate noise and the mean thickness and thickness distribution may be corrected for instrumental broadening.

First, an XRD 001 peak intensity distribution, where $l$ is the peak order, is corrected for the Lorentz-polarisation factor (LP), for a layer scattering factor (if required) and a scattering background. As a result of these corrections, the interference function of the peak $\phi_{00l}(Z^*)$ expressed as a function of $Z^* (= 2\sin\theta/\lambda)$ is obtained, which contains information of the CTD and strain. At the next step the interference function is expanded in terms of a Fourier series:

$$H(n) = \sum_{Z^*=\frac{2\sin(\theta_{00l}-\Delta\theta)}{\lambda}}^{\frac{2\sin(\theta_{00l}+\Delta\theta)}{\lambda}} \phi_{00l}(Z^*)\cos(2\pi Z_n Z^*) \qquad (1)$$

where $Z_n = nd(001)$, $n$ is the number of fat molecule structural layers, $d(001)$ is the interlayer spacing, $\theta_{00l}$ is the XRD peak position, $2\Delta\theta$ is the width of analysed Bragg angle interval. The Fourier coefficients calculated from Equation (2) are related to the CTD function f(M), represented via a number of TAG layers in the crystallites, M:

$$H(n) = \frac{1}{\overline{M}} \sum_{M=M_1}^{M_2} (M-n)f(M) \qquad (2)$$

where M1 and M2 correspond to CTDs having the smallest and the largest number of TAG layers, respectively, and $\overline{M}$ is the mean number of layers defined as:

$$\overline{M} = \sum_{M=M_1}^{M_2} Mf(M) \text{ and } \sum_{M=M_1}^{M_2} f(M) = 1 \qquad (3)$$

It follows from Equation (3) that the mean thickness (ACT) and the thickness distribution (CTD) can be obtained from H(n):

$$\frac{\partial H(n)}{\partial n}\bigg|_{n \to 0} = \frac{1}{\overline{M}} \text{ and } \frac{\partial^2 H(n)}{\partial n^2}\bigg|_{n \to 0} = \frac{f(M)}{\overline{M}} \tag{4}$$

The average crystal thickness (ACT) and CTD can be obtained from $\overline{T} = \overline{M}d(001)$ and $f(T)$ respectively.

**Uniform hardness measurement**

The hardness of the fat component was determined by using a Stevens-LFRATexture Analyser (AMETEK / Brookfield), equipped with either a 0.75 mm probe or a 2.00 mm probe. The fat component was in the form of a block or a container filled with the fat. The fat was taken out of the controlled temperature room and the measurements were carried out within 10 minutes in order to minimize temperature fluctuations in the fat sample. The probe penetrated into the fat block at a constant speed of 1 mm/s and the penetration depth was set at a standard value of 0.8 cm for the 0.75 mm probe and 1.0 cm for the 2.00 mm probe. The load achieved at the end of this protocol was recorded in grams. This procedure was repeated at least ten times at several locations on the upper surface of the fat block, separated by a distance sufficiently large, i.e. a distance equal to 10 times the probe width, in order to avoid history effects caused by preceding measurements. Care was taken that a uniform deformation was achieved so that undesired artefacts occurred such as cracking did not occur. If artefacts occurred, measurements were discarded from the dataset and more measurements were taken in order to reach the minimum required amount of 10 repeats. The standard deviation and standard error for the hardness measurements for each fat component were calculated.

**Example 1**

A set of fat components (fat blends 1-8) were produced at a pilot scale votator setup (100 kg batches) making use of two A-Units (scraped surface heat exchangers) arranged in series. Both A-units were operated at a standard rpm of 800. Each A-unit had a length of 21.8 cm, a tube diameter of 6.0 cm and a shaft diameter of 5,4. Both were cooled with -30°C freon. The line operated at a throughput of 100kg/h and the inlet temperature of the first A-unit was 75°C. Each fat blend was collected in 500g tubs (l = 13cm, w = 8 cm, h = 6cm) and stored in a 5°C room. Another fat blend 9 was quiescently cooled to 5°C.

After chilling the fats for a week at 5°C, the N-lines of the fat blends were determined using the method described in Animal and vegetable fats and oils -- Determination of solid fat content by pulsed NMR -- Part 1: Direct method - ISO 8292-1:2008.

Table 2: Composition, solids level, processing conditions of fat blends produced for bouillon cube production.

| Ingredient | Blend 1 | Blend 2 | Blend 3 | Blend 4 | Blend 5 | Blend 6 | Blend 7 | Blend 8 | Blend 9 |
|---|---|---|---|---|---|---|---|---|---|
| RP[1] | - | - | - | - | - | - | 40 | 50 | - |
| PO[2] | 85 | 80 | 70 | 60 | 50 | 85 | - | - | - |
| dfPOs[3] | 15 | 20 | 30 | 40 | 50 | - | 60 | 40 | 80 |
| PO58[4] | - | - | - | - | - | 15 | - | 10 | 20 |
| Solids mass percentage at given temperature | | | | | | | | | |
| $N_5$ (%) | 73.8 | 75.2 | 77.8 | 80.1 | 81.0 | 77.6 | 51.7 | 46.5 | 90.3 |
| $N_{10}$ (%) | 63.3 | 65.1 | 69.4 | 72.6 | 74.3 | 69.1 | 48.6 | 44.3 | 89.4 |
| $N_{20}$ (%) | 33.0 | 36.8 | 42.5 | 47.6 | 51.2 | 47.5 | 37.0 | 35.8 | 80.3 |
| $N_{30}$ (%) | 13.8 | 16.7 | 20.2 | 24.4 | 28.5 | 27.5 | 26.0 | 25.9 | 62.5 |
| $N_{35}$ (%) | 9.5 | 11.9 | 15.1 | 18.7 | 22.2 | 21.6 | 20.8 | 21.8 | 53.3 |
| $N_{40}$ (%) | 6.3 | 8.0 | 10.9 | 13.7 | 16.4 | 16.0 | 16.6 | 17.1 | 44.8 |
| A-unit exit temperatures during production | | | | | | | | | |

(continued)

| Ingredient | Blend 1 | Blend 2 | Blend 3 | Blend 4 | Blend 5 | Blend 6 | Blend 7 | Blend 8 | Blend 9 |
|---|---|---|---|---|---|---|---|---|---|
| $T_{exit}$ A1 (°C) | 20 | 25 | 25 | 25 | 25 | 25 | 22 | 25 | QC* |
| $T_{exit}$ A2 (°C) | 10 | 10 | 15 | 15 | 15 | 15 | 10 | 11 | QC* |

| |
|---|
| * quiescently cooled |
| [1] rapeseed oil |
| [2] palm oil |
| [3] dry fractionated palm stearin (iodine value = 36) |
| [4] fully hydrogenated palm oil |

## Example 2

The volume weighted crystallite thickness distributions (CTD) of blend 5, 6 and 9 of example 1 were determined as follows. Blend 5 was analysed in block format. Blends 6 and 9 (typical bouillon fat) were analysed in both block and extruded format. Blends 6 and 9 were brought to 20°C and extruded into strands of 2 mm in diameter, using a hydraulic press. The CTD of these blends was measured using SAXD (see table 3):

Table 3

| Fat component | 50% & 90% levels of CTD in a fat block (nm) | 50% & 90% levels of CTD in extruded fat (nm) |
|---|---|---|
| Blend 5 | 33 & 46 | N.A. |
| Blend 6 | 33 & 54 | 33 & 54 |
| Blend 9 | 42 & 67 | 54 & 83 |

The CTD-measurements of the blends in Table 3 indicate that blends 5 & 6 (having an $N_{20}$ above 20% and a $N_{35}$ below 30%), have lower CTD's compared to the blend 9, that has an $N_{35}$ above 30%. Moreover, upon extrusion blend 6 has practically the same CTD, whereas the blend 9 (typical bouillon fat) shows an increase in CTD upon extrusion indicating that blend 6 is better suited to the production of savoury concentrates by extrusion (see product E and product F, example 4).

## Example 3

Fat components were also assessed for uniform hardness by the protocol described above.

Table 4

| | Blend 2 | Blend 2 |
|---|---|---|
| Cooling method | A-unit [a] | Q.C [b] |
| Hardness at 20°C (g) (2.00 mm probe) | 175 | 131 |
| Standard deviation (n=20) | 10 | 23 |
| Standard error (percentage) | 0.06 (6) | 0.18 (18) |

| |
|---|
| [a] according to example 1 |
| [b] according to example 1 but quiescently cooled to 5°C instead of using votator set-up |

Fat components having an acceptable hardness, i.e. a uniform hardness across the fat block, have a standard error of less than 20%, preferably less than 10%. Blend 2 was used in a bouillon cube (example 5).

## Example 4

A set of chicken bouillon cubes at different fat / water levels and ratios and different fat components were prepared, with recipes according to table 5.

Products were produced at pilot plant scale and as mixers, either a 50 litre Plough shear mixer (Lödige) was used for batches of 30 kg batches of mixes A-D or a Z-arm mixer (Battagion, Italy) was used to produce 35 kg batches of mixes E-F. The powder ingredients (salt, MSG, chicken spice mix, potato starch) were mixed, water was added and mixed and then the fat component admixed. The mixing was stopped once a homogeneous kneadable paste had been formed and the resulting mixing time is recorded for each product. The resulting mixes were packed immediately after mixing or after up to 24 h of maturation. The pastes were Packaged on a Corazza™ FD220 extruder at a maximum packaging rate resulting in bouillon cubes.

Table 5

| Ingredient | Product A | Product B | Product C | Product D | Product E | Product F (comparative) |
|---|---|---|---|---|---|---|
| salt | 41.6 | 42.8 | 43.6 | 41.6 | 41.6 | 41.6 |
| MSG | 14.8 | 15.2 | 15.5 | 14.8 | 14.8 | 14.8 |
| Chicken spice mix | 9.8 | 9.8 | 9.8 | 9.8 | 9.8 | 9.8 |
| Potato starch | 14.0 | 14.0 | 14.0 | 14.0 | 14.0 | 14.0 |
| Water | 3.9 | 5.4 | 1 | 3.9 | 3.9 | 3.9 |
| Blend 6 - block | 15.9 | 12.8 | 16.1 | - | - | - |
| Blend 5 - block | - | - | - | 15.9 | - | - |
| Blend 6 - extruded | - | - | - | - | 15.9 | - |
| Blend 9 - extruded | - | - | - | - | - | 15.9 |
| Processing parameters | | | | | | |
| Mixer | Plough shear | Plough shear | Plough shear | Plough shear | zz | zz |
| $T_{fat}$ at dosage (°C) | 18.7 | 17.5 | 18.5 | 30.2 | 19.8 | 20 |
| Mixing time for fat (min) | 5 | 8 | 6 | 2 | 6 | 25 |
| Packaging line | FD220 | FD220 | FD220 | FD220 | MD150 | MD150 |
| Resulting cube properties | | | | | | |
| Cube Hardness (g) | 39 ± 0.8 | 38 ± 0.7 | 35 ± 0.7 | 38 ± 1.7 | 31 ± 0.6 | 62 ± 3.6 |
| Dissolution time (s) | 44 ± 0.8 | 42 ± 1.6 | 37 ± 1.5 | 36 ± 2.2 | 43 ± 2.7 | 45 ± 0.2 |
| $A_w$ (-) | 0.64 | 0.66 | 0.47 | 0.64 | 0.64 | 0.64 |

Chicken bouillon cubes (products A-E) made with fat blends 5 and 6 in either block or extruded format, result in cubes having acceptable hardness and dissolution times. A chicken bouillon cube (product F) made with fat blend 9 having an $N_{35}$ of more than 30, requires a long mixing time, which is undesirable, and results in a cube that is undesirably hard.

The results show that the process according to the invention achieves a substantial reduction in mixing time and does not require a maturation step.

**Example 5**

Two beef bouillon cubes were produced in which product G was made using fat blend 2 (example 1) and product H was made using fat blend 2 but mixed with the powder ingredients in molten form. A third beef product was made, product I, in which a fat blend 9 (example 1) is used in molten form.

Table 6

| Ingredient | Product G | Product H | Product I |
|---|---|---|---|
| Salt | 42 | 41 | 42 |
| MSG | 15 | 16 | 15 |
| Beef spice mix | 11 | 11 | 11 |
| Potato starch | 14 | 14 | 14 |
| Water | 4.5 | 4.5 | 4.5 |
| Blend 2 | 13.5 | - | - |
| Blend 2 - molten | - | 13.5 | - |
| Blend 9 - molten | - | - | 13.5 |
| Processing parameters | | | |
| Mixer | Plough shear | Plough shear | Plough shear |
| $T_{fat}$ at dosage (°C) | 20.2 | 63.8 | 65 |
| Mixing time for fat (min) | 3 | 2.5 | 2 |
| Packaging line | FD220 | FD220 | FD220 |
| Maturation needed | No | Yes | Yes* |
| Resulting cube properties | | | |
| Cube Hardness (N) | 25 ± 0.5 | 18 ± 1.2 | N.A. |
| CTD* (50%; nm) | 38 | 50 | N.A. |
| Dissolution time (s) | 35 ± 1.7 | 37 ± 2.6 | N.A. |
| $A_w$ (-) | 0.63 | 0.61 | N.A. |

When fat blend 2 was admixed at a temperature at which it contained a substantial amount of solid fat, an acceptable savoury concentrate (product A) was obtained which could be packed immediately after mixing.

In the case when fat blend 2 was added in molten form, i.e. having a solid fat content of 0% (product B), the mass appeared very soft after mixing and could not be packaged. After maturation of one day, the mix could be packed, but the resulting cubes were still very soft, which is undesirable in high speed packaging of cubes. The resulting cubes remained relatively soft, even after one week.

When fat blend 9 was used in molten form, product C, it was necessary to allow the mass to mature. Following maturation, a mass was obtained which was very hard. The packaging unit could not dose sufficient amount of product per portion indicating that the mix was too hard to process. Moreover, following mixing of the fat blend with the powder ingredients, the mass in the received vessel hardened up, making it even harder for this mix to run. Consequently, product C was not processable and no cubes were made.

Example 6

Savoury concentrates according to Example 1 (6-A) and Example 2 (6-B) of WO 2017186514A1 were prepared, following the method of WO 2017186514A1

| | 6-A | 6-B |
|---|---|---|
| Ingredients | Wt.% | |
| Sodium chloride | 39.0 | 40.6 |
| Monosodium glutamate | 13.2 | 13.8 |

(continued)

| Ingredients | Wt.% | |
|---|---|---|
| Spice mix | 9.3 | 9.7 |
| Wheat flour | 10.0 | 10.4 |
| Glutinous rice flour | 7.0 | 7.3 |
| Palm olein $N_{20}<15$; $N_{35}<1$ | 10 | 0 |
| Sunflower oil | 0 | 8.3 |
| Water | 1.5 | 0 |
| Glucose syrup | 0 | 1.6 |
| Dry fractionated palm stearin ($N_{20}$=60-70; $N_{35}$=32-40%) | 10.0 | 8.3 |

In both 6-A and 6-B the volume weighted crystallite thickness distribution is more than 40 nm (i.e. at least 50% crystallites have a crystallite thickness of more than 40 nm.) The large crystallite thickness is a result of the fat component being added in molten state in the method of WO 2017186514A1.

**Claims**

1. A process of preparing a shaped savoury concentrate having a water activity of less than 0.8 and a total fat content of 10-35 wt.%, said process comprising:

   a) combining the following ingredients to prepare a powder mixture:

   • 100 parts by weight of edible salt selected from sodium chloride, potassium chloride and combinations thereof,
   • 2-150 parts by weight of one or more particulate ingredients selected from sugars, glutamate, plant pieces and combinations thereof;

   b) admixing 5-150 parts by weight of a fat component to the powder mixture to form a paste, wherein the fat component has a solid fat content of fat at 20°C ($N_{20}$) of at least 20% and an solid fat content of fat at 35°C ($N_{35}$) of less than 30%, wherein on admixing with the powder mixture the fat component has a solid fat content ($N_{20}$) of least 10%, whereby step b) is carried out at a temperature in the range of 10 to 45°C, preferably 12 to 40°C, more preferably 15 to 35°C and said temperature on admixing is maintained such that the fat component has a solid fat content of at least 10%, preferably at least 20%.
   c) extruding the paste into shaped savoury concentrate.

2. Process according to claim 1, wherein the edible salt has a mass weighted average diameter in the range of 10-2000 μm.

3. Process according to claim 1 or 2, wherein an edible polar liquid is either combined with the powder mixture prior to admixing the fat component, separately admixed to the powder mixture or added with the fat component.

4. Process according claim 3, wherein the edible polar liquid contains 20-100 wt.% of fluid selected from water, liquid polyols, ethanol and combinations thereof.

5. Process according to any one of the preceding claims, wherein the fat component has a solid fat content at 20°C ($N_{20}$) of less than 60%, preferably less than 55%, more preferably less than 50%.

6. Process according to any one of the preceding claims, wherein the fat component has a solid fat content at 35°C ($N_{35}$) of less than 25%, even more preferably less than 20%.

7. Process according to any one of the preceding claims, wherein the fat component has been kept at a temperature below 40°C for at least 1 hour, prior to the admixing with the powder mixture.

8. Process according to any one of the preceding claims, wherein 3-100 parts by weight of one or more particulate ingredients include 0.5-50 parts by weight of glutamate.

9. Process according to any one of the preceding claims, wherein 3-100 parts by weight of one or more particulate ingredients include 1-75 parts by weight of starch components selected from flour, starch and combinations thereof.

10. Process according to any one of the preceding claims, wherein temperature on admixing the fat component in step b) is in the range of 10- 40°C, preferably wherein the paste is extruded in step c) at an exit temperature in the range of 5-40°C,

11. Process according to any one of the preceding claims, wherein the paste is extruded within 30 minutes after the fat component has been admixed to the powder mixture, preferably wherein the paste is extruded within 15, more preferably within 10 minutes, after the fat component has been admixed to the powder mixture.

12. Process according to any one of the preceding claims, wherein the paste is formed into shaped articles having a weight of 1 to 50 grams.

13. A savoury concentrate having a water activity of less than 0.8 obtainable by a process according to any one of claims 1-12.

14. An extruded savoury concentrate having a water activity of less than 0.8 and comprising:

- 30-80 wt.% of edible salt selected from sodium chloride, potassium chloride and combinations thereof;
- 2.4-50 wt.% of one or more particulate ingredients selected from sugars, glutamate, plant pieces and combinations thereof;
- 0.2-8 wt.% of polar fluid selected from water, liquid polyols, ethanol and combinations thereof;
- 10-20 wt.% of fat component, wherein the fat component has a $N_{20}$ of at least 20% and an $N_{35}$ of less than 30%, wherein the fat component has a volume weighted crystallite thickness distribution wherein at least 50% of crystallites have a crystallite thickness of less than 40 nm;
- 0-5 wt.% of maltodextrin;

wherein the combination of edible salt and the one or more particulate ingredients constitutes at least 60 wt.% of the savoury concentrate.

15. Savoury concentrate according to claim 14, wherein the savoury concentrate has a hardness in the range of 20-50 N.

**Patentansprüche**

1. Verfahren zur Herstellung eines geformten wohlschmeckenden Konzentrats mit einer Wasseraktivität von weniger als 0,8 und einem Gesamtfettgehalt von 10-35 Gew.-%, wobei das Verfahren umfasst:

a) Kombinieren der folgenden Zutaten, um eine Pulvermischung herzustellen:

- 100 Gewichtsteile Speisesalz, ausgewählt aus Natriumchlorid, Kaliumchlorid und Kombinationen davon;
- 2-150 Gewichtsteile einer oder mehrerer teilchenförmiger Zutaten, ausgewählt aus Zuckern, Glutamat, Pflanzenstücken und Kombinationen davon;

b) Beimischen von 5-150 Gewichtsteilen einer Fettkomponente zu der Pulvermischung, um eine Paste zu bilden, wobei die Fettkomponente einen Festfettgehalt von Fett bei 20°C ($N_{20}$) von mindestens 20% und einen Festfettgehalt von Fett bei 35°C ($N_{35}$) von weniger als 30% aufweist, wobei die Fettkomponente beim Beimischen zu der Pulvermischung einen Festfettgehalt ($N_{20}$) von mindestens 10% aufweist, wobei Schritt b) bei einer Temperatur in dem Bereich von 10 bis 45°C, vorzugsweise von 12 bis 40°C, bevorzugter von 15 bis 35°C, durchgeführt wird und die Temperatur beim Beimischen derartig aufrechterhalten wird, dass die Fettkomponente einen Festfettgehalt von mindestens 10%, vorzugsweise von mindestens 20%, aufweist,
c) Extrudieren der Paste zu einem geformten wohlschmeckenden Konzentrat.

2. Verfahren nach Anspruch 1, wobei das Speisesalz einen massegewichteten durchschnittlichen Durchmesser in dem Bereich von 10-2000 μm aufweist.

3. Verfahren nach Anspruch 1 oder 2, wobei eine essbare polare Flüssigkeit entweder mit der Pulvermischung vor dem Beimischen der Fettkomponente kombiniert, separat mit der Pulvermischung vermischt oder der Fettkomponente zugefügt wird.

4. Verfahren nach Anspruch 3, wobei die essbare polare Flüssigkeit 20-100 Gew.-% Flüssigkeit, ausgewählt aus Wasser, flüssigen Polyolen, Ethanol und Kombinationen davon, enthält.

5. Verfahren nach irgendeinem der vorhergehenden Ansprüche, wobei die Fettkomponente einen Festfettgehalt bei 20°C ($N_{20}$) von weniger als 60%, vorzugsweise von weniger als 55%, bevorzugter von weniger als 50%, aufweist.

6. Verfahren nach irgendeinem der vorhergehenden Ansprüche, wobei die Fettkomponente einen Festfettgehalt bei 35°C ($N_{35}$) von weniger als 25%, noch bevorzugter von weniger als 20%, aufweist.

7. Verfahren nach irgendeinem der vorhergehenden Ansprüche, wobei die Fettkomponente vor dem Beimischen zu der Pulvermischung mindestens 1 Stunde lang bei einer Temperatur unter 40°C gehalten wird.

8. Verfahren nach irgendeinem der vorhergehenden Ansprüche, wobei 3-100 Gewichtsteile einer oder mehrerer teilchenförmiger Zutaten 0,5-50 Gewichtsteile Glutamat enthalten.

9. Verfahren nach irgendeinem der vorhergehenden Ansprüche, wobei 3-100 Gewichtsteile einer oder mehrerer teilchenförmiger Zutaten 1-75 Gewichtsteile Stärkekomponenten, ausgewählt aus Mehl, Stärke und Kombinationen davon, enthalten.

10. Verfahren nach irgendeinem der vorhergehenden Ansprüche, wobei die Temperatur beim Beimischen der Fettkomponente im Schritt b) in dem Bereich von 10-40°C liegt, wobei die Paste im Schritt c) vorzugsweise bei einer Austrittstemperatur in dem Bereich von 5-40°C extrudiert wird.

11. Verfahren nach irgendeinem der vorhergehenden Ansprüche, wobei die Paste innerhalb von 30 Minuten extrudiert wird, nachdem die Fettkomponente der Pulvermischung beigemischt worden ist, vorzugsweise wobei die Paste innerhalb von 15 Minuten, bevorzugter innerhalb von 10 Minuten, extrudiert wird, nachdem die Fettkomponente der Pulvermischung beigemischt worden ist.

12. Verfahren nach irgendeinem der vorhergehenden Ansprüche, wobei die Paste zu geformten Artikeln mit einem Gewicht von 1 bis 50 Gramm geformt wird.

13. Wohlschmeckendes Konzentrat mit einer Wasseraktivität von weniger als 0,8, erhältlich durch ein Verfahren nach irgendeinem der Ansprüche 1-12.

14. Extrudiertes wohlschmeckendes Konzentrat mit einer Wasseraktivität von weniger als 0,8 und umfassend:

   • 30-80 Gew.-% Speisesalz, ausgewählt aus Natriumchlorid, Kaliumchlorid und Kombinationen davon;
   • 2,4-50 Gew.-% einer oder mehrerer teilchenförmiger Zutaten, ausgewählt aus Zuckern, Glutamat, Pflanzenstücken und Kombinationen davon;
   • 0,2-8 Gew.-% polare Flüssigkeit, ausgewählt aus Wasser, flüssigen Polyolen, Ethanol und Kombinationen davon;
   • 10-20 Gew.-% Fettkomponente, wobei die Fettkomponente einen $N_{20}$ von mindestens 20% und einen $N_{35}$ von weniger als 30% aufweist, wobei die Fettkomponente eine volumengewichtete Kristallitdickenverteilung aufweist, wobei mindestens 50% der Kristallite eine Kristallitdicke von weniger als 40 nm aufweisen;
   • 0-5 Gew.-% Maltodextrin;

   wobei die Kombination aus Speisesalz und der einen oder der mehreren teilchenförmigen Zutaten mindestens 60 Gew.-% des wohlschmeckenden Konzentrats ausmacht.

15. Wohlschmeckendes Konzentrat nach Anspruch 14, wobei das wohlschmeckende Konzentrat eine Härte in dem Bereich von 20-50 N aufweist.

**Revendications**

1. Procédé de préparation d'un concentré savoureux façonné ayant une activité d'eau inférieure à 0,8 et une teneur totale en graisse de 10-35 % en masse, ledit procédé comprenant :

   a) la combinaison des ingrédients suivants pour préparer un mélange de poudre :

   • 100 parties en masse de sel comestible choisi parmi le chlorure de sodium, chlorure de potassium et des combinaisons de ceux-ci,
   • 2-150 parties en masse d'un ou plusieurs ingrédients particulaires choisis parmi des sucres, du glutamate, des morceaux de plantes et des combinaisons de ceux-ci ;

   b) mélange de 5-150 parties en masse d'un constituant de graisse au mélange de poudre pour former une pâte, dans lequel le constituant de graisse présente une teneur en graisse de graisse solide à 20°C ($N_{20}$) d'au moins 20 % et une teneur en graisse de graisse solide à 35°C ($N_{35}$) inférieure à 30 %
   dans lequel lors du mélange avec le mélange de poudre le constituant de graisse présente une teneur en graisse solide ($N_{20}$) d'au moins 10 %, sur quoi l'étape b) est réalisée à une température dans l'intervalle de 10 à 45°C, de préférence 12 à 40°C, encore mieux 15 à 35°C et ladite température lors du mélange est maintenue de sorte que le constituant de graisse présente une teneur en graisse solide d'au moins 10 %, de préférence d'au moins 20 %
   c) l'extrusion de la pâte en un concentré savoureux façonné.

2. Procédé selon la revendication 1, dans lequel le sel comestible présente un diamètre moyen pondéré en masse dans l'intervalle de 10-2 000 $\mu$m.

3. Procédé selon la revendication 1 ou 2, dans lequel un liquide polaire comestible est soit combiné avec le mélange de poudre avant le mélange du constituant de graisse, séparément mélangé au mélange de poudre soit ajouté avec le constituant de graisse.

4. Procédé selon la revendication 3, dans lequel le liquide polaire comestible contient 20-100 % en masse de fluide choisi parmi l'eau, des polyols liquides, l'éthanol et des combinaisons de ceux-ci.

5. Procédé selon l'une quelconque des revendications précédentes, dans lequel le constituant de graisse présente une teneur de graisse solide à 20°C ($N_{20}$) inférieure à 60 %, de préférence inférieure à 55 %, encore mieux inférieure à 50 %.

6. Procédé selon l'une quelconque des revendications précédentes, dans lequel le constituant de graisse présente une teneur de graisse solide à 35°C ($N_{35}$) inférieure à 25 %, encore mieux inférieure à 20%.

7. Procédé selon l'une quelconque des revendications précédentes, dans lequel le constituant de graisse a été maintenu à une température inférieure à 40°C pendant au moins 1 heure, avant le mélange avec le mélange de poudre.

8. Procédé selon l'une quelconque des revendications précédentes, dans lequel 3-100 parties en masse d'un ou plusieurs ingrédients particulaires comprennent 0,5-50 parties en masse de glutamate.

9. Procédé selon l'une quelconque des revendications précédentes, dans lequel 3-100 parties en masse d'un ou plusieurs ingrédients particulaires comprennent 1-75 parties en masse de constituants d'amidon choisis parmi de la farine, de l'amidon et des combinaisons de ceux-ci.

10. Procédé selon l'une quelconque des revendications précédentes, dans lequel la température lors du mélange du constituant de graisse dans l'étape b) se trouve dans l'intervalle de 10-40°C, de préférence dans lequel la pâte est extrudée dans l'étape c) à une température de sortie dans l'intervalle de 5-40°C.

11. Procédé selon l'une quelconque des revendications précédentes, dans lequel la pâte est extrudée dans les 30 minutes après que le constituant de graisse a été mélangé au mélange de poudre, de préférence dans lequel la pâte est extrudée dans les 15, encore mieux dans les 10 minutes, après que le constituant de graisse a été mélangé au mélange de poudre.

12. Procédé selon l'une quelconque des revendications précédentes, dans lequel la pâte est formée en des articles façonnés ayant une masse de 1 à 50 grammes.

13. Concentré savoureux ayant une activité d'eau inférieure à 0,8 pouvant être obtenu par un procédé selon l'une quelconque des revendications 1-12.

14. Concentré savoureux extrudé ayant une activité d'eau inférieure à 0,8 et comprenant :

  • 30-80 % en masse de sel comestible choisi parmi le chlorure de sodium, chlorure de potassium et des combinaisons de ceux-ci ;
  • 2,4-50 % en masse d'un ou plusieurs ingrédients particulaires choisis parmi des sucres, du glutamate, des morceaux de plantes et des combinaisons de ceux-ci ;
  • 0,2-8 % en masse de fluide polaire choisi parmi l'eau, des polyols liquides, l'éthanol et des combinaisons de ceux-ci ;
  • 10-20 % en masse de constituant de graisse, dans lequel le constituant de graisse présente une $N_{20}$ d'au moins 20 % et une $N_{35}$ inférieure à 30 %, dans lequel le constituant de graisse présente une distribution d'épaisseur de cristallite pondérée en volume dans laquelle au moins 50 % de cristallites présentent une épaisseur de cristallite inférieure à 40 nm ;
  • 0-5 % en masse de maltodextrine ;

dans lequel la combinaison de sel comestible et du un ou plusieurs ingrédients particulaires constitue au moins 60 % en masse du concentré savoureux.

15. Concentré savoureux selon la revendication 14, dans lequel le concentré savoureux présente une dureté dans l'intervalle de 20-50 N.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6099888 A
- WO 2017186514 A

- WO 2017186514 A1

**Non-patent literature cited in the description**

- **M.E. BERTAUT.** *Acta Crystallogr,* 1950, vol. 3, 14
- **B. E. WARREN ; B. L. AVERBACH.** *J. Appl. Phys.,* 1950, vol. 21, 595

- **V. A. DRITS ; D. D. EBERL ; J. SRODON.** *Clays and Clay Minerals,* 1998, vol. 46, 38